(19) Europäisches Patentamt
European Patent Office
Office européen des brevets

(11) EP 2 312 775 B1

(12) EUROPEAN PATENT SPECIFICATION

(45) Date of publication and mention
of the grant of the patent:
**30.01.2013 Bulletin 2013/05**

(51) Int Cl.:
***H04J 3/06*** *(2006.01)*

(21) Application number: **09290787.2**

(22) Date of filing: **15.10.2009**

(54) **Physical time-stamping**

Physikalisches Zeitstempeln

Horodatage physique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.04.2011 Bulletin 2011/16**

(73) Proprietor: **Alcatel Lucent**
**75007 Paris (FR)**

(72) Inventors:
• **Bui, Dinh Thai**
**92290 Chatenay-Malabry (FR)**
• **Le Pallec, Michael**
**91300 Massy (FR)**

(74) Representative: **Anderlini, Alain et al**
**Alcatel-Lucent Bell NV**
**Copernicuslaan 50**
**2018 Antwerpen (BE)**

(56) References cited:
**WO-A2-01/50657      US-A1- 2002 024 973**

• **ANONYMOUS ED - ANONYMOUS: "IEEE Standard for a Precision Clock Synchronization Protocol for Networked Measurement and Control Systems; IEEE Std 1588-2008 (Revision of IEEE Std 1588-2002)" 24 July 2008 (2008-07-24), IEEE STANDARD; [IEEE STANDARD], IEEE, PISCATAWAY, NJ, USA, PAGE(S) C1 - 269 , XP017601899 ISBN: 9780738154008 * chapter 6: Clock synchronization model * * ***
• **YAMADA Y ET AL: "Hardware-based precise time synchronization on Gb/s ethernet" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 1, 28 November 2005 (2005-11-28), pages 152-156, XP010881277 ISBN: 978-0-7803-9414-8**

EP 2 312 775 B1

## Description

## Technical Field of the invention

The invention relates to the distribution of a time reference (and therefore a phase reference and a frequency reference as well) across a communication network.

## Technical Background of the invention

Many protocols have been specified in order to distribute a time reference across a communication network. Amongst them, the most important ones to be cited are Network Time Protocol (NTP) from the Internet Engineering Task Force (IETF), and Precision Time Protocol (PTP) from the Institute of Electrical and Electronics Engineers (IEEE) also referred to as IEEE 1588.

The performance of these time-stamped packet protocols generally suffers from packet network jitter and packet transmission delay asymmetry. The former is related to Packet Delay variation (PDV) essentially caused by packet queuing and CPU load variation within network nodes (e.g., router, switches) along the communication path between the master and the slave. The latter is the result of differences in the transmission delay in one direction of communication (e.g., from master to slave) as compared to the reverse direction of communication (e.g., from slave to master), which is inherent to all packet-based networks. In brief, the performance of time-stamped packet protocols greatly depends on the network background traffic level, which is generally not predictable.

In order to fight out this issue, hardware-assisted mechanism such as Transparent clocks (TC) and Hardware Time-stamping (HT) are introduced within a fully controlled hop-by-hop PDV management architecture, aiming at providing a very accurate time distribution.

With HT, a Time stamping Unit (TSU) placed between the Ethernet Media Access control (MAC) and the Ethernet PHY transceiver sniffs both inbound and outbound traffic and issues a time stamp when the leading bits of a 1588 packet are identified, precisely marking the arrival or departure time of 1588 packets.

At present, Tc cannot be deployed everywhere as per the additional costs, and HT reveals inefficient in many situations due to the modulation and/or encoding used at the Physical Medium Dependent (PMD) layer.

For Time Division Duplex (TDD) wireless/mobile technologies, such as UMTS TDD and LTE TDD, 50 ppb and 1,25 μs are respectively mentioned as frequency and time accuracy requirements over the air interface. 1,25 μs time accuracy is not achievable with packet-based protocol, particularly when mobile/wireless base stations are backhauled through Digital subscriber Line (DSL). This is only achievable through Global Position system (or GPS). Unfortunately, GPS cannot be deployed everywhere as per technical issues (e.g., indoor environment) and political issues (e.g., national policy).

The patent application entitled "Synchronization of Nodes", published on July 12, 2001 with publication number WO 01/50657 A2, discloses a method and apparatus for adjusting an oscillator in a network for frequency drift. Nodes in the network exchange time stamp messages. The time stamp messages contain the time the time stamp message is transmitted, the nodes measurement of an interval and an uncertainty value for the nodes estimation of the interval. By exchanging measurements of common intervals, nodes can determine how far their oscillators have drifted from the correct oscillating frequency.

The patent application entitled "Hardware Time Stamping and Registration of Packetized Data Method and system", published on February 28, 2002 with publication number US 2002/024973 A1, discloses a system for time-stamping a data packet associated with a data network, and allowing software applications, running on non-deterministic systems, to determine the precise time that packets were transmitted to or received from a physical network interface. The system includes a network media interface device for transferring a data packet to or from a network medium, and a time source for generating and maintaining a time code. The system further includes a time-stamping circuit for sampling a time code from the time source when the interface device transfers the data packet to or from the network medium, and for associating the time code with the receive data packet so as to form a time-stamped packet.

Summary of the Invention

It is an object of the present invention to overcome the aforementioned shortcomings of the prior art and to improve the distribution of a master clock reference across a packet-based communication network with high PDV and/or delay asymmetry.

In accordance with a first aspect of the invention, a method for synchronizing a slave clock at a slave node to a master clock reference at a master node comprises the steps of:

- at a transmit reference point at said master node, and in the course of transmitting a particular physical signal, time-stamping a particular transmit event with regard to said master clock, thereby yielding a departure time,
- at a receive reference point at said slave node, and in the course of receiving said particular physical signal, time-stamping a corresponding receive event (i.e., a receive event corresponding to said particular transmit event) with regard to said slave clock, thereby yielding an arrival time,
- determining a one-way transmission delay of said particular physical signal over a transmission segment that spans from said transmit reference point up to said receive reference point, or over part thereof,

- sending synchronization information to said slave node apart from said particular physical signal indicative of said departure time,,

wherein the occurrence of said particular physical signal is controlled by a physical communication layer only and is not related to the sending of a data frame or data packet from a higher communication layer,
wherein said particular physical signal is a predetermined data symbol, and said particular transmit event and said corresponding receive event is a predetermined time sample of said predetermined data symbol,
and wherein said synchronization information are further indicative of said one-way transmission delay, thereby allowing the adjustment of said slave clock at said slave node.

The ideal solution would consist in conveying the time-stamp at the physical layer as per analogy to what have been deployed for network syntonization. Indeed, network synchronization makes use of the physical layer and is thus independent of the network traffic load, with well-known performance specified for stringent applications such as mobile backhaul. Unfortunately, the blocking point for a complete realization of time synchronization at the physical layer is the time-stamp important size (e.g., 10 octets are required for conveying the 1588 time-stamp) which requires the redefinition of the existing physical frame structure.

Aspects of the invention are based on the observation that the fundamental issue with hardware time-stamping, as defined in IEEE 1588v2 standard, is related to the fact that the reference timing point is bound to the packet entity, such as the packet start or the Ethernet MAC header start. This prevents the time-stamp reference points from being defined as low as the physical layer as the packer/frame start does not have any more meaning at this layer.

Accordingly, there is provided a method which comprises the following steps:

- making use of a specific pattern within the physical signal structure as a physical timing signal in order to perform time synchronization,
- time-stamping the emission of the physical timing signal at the master node with regard to the master timescale, thereby yielding a departure time $t_{\mu}$,
- time-stamping the reception of the physical timing signal at the slave node with regard to the slave timescale, thereby yielding an arrival time $t_s$,
- precisely estimating a one-way transmission delay d of the physical timing signal from the emission reference point up to the reception reference point, or over part thereof,
- asynchronously sending the emission time-stamp $t_M$ and the one-way transmission delay d, or alternatively the expected arrival time $t_M + d$, to the slave node,

- based on the knowledge of the measured one-way transmission delay d, and the above time-stamp information $t_M$ and $t_S$, the slave compares its local clock time to the master clock time and corrects the time offset accordingly:

$$offset = t_S - (t_M + d) \ (1).$$

The occurrence of the particular physical signal, and further of the particular transmit event that is used as common timing reference, is controlled by the PMD layer or alike, and is not related to the sending of a data frame or data packet from a higher communication layer, such as a PAUSE frame from the MAC layer or a SYNC packet from the PTP layer.

A predetermined time sample of a data symbol is used as the reference timing signal, provided the symbol clock is recovered and symbol boundaries are delineated at the receiver (e.g., by means of a cyclic prefix or suffix insertion, and by means of a correlation of the received signal with a shifted copy of itself).

This embodiment proves particularly advantageous for orthogonal Frequency Division Multiplexing (OFDM) or Discrete Multi-Tones (DMT) communications, such as DSL or LTE communications.

In one embodiment of the invention, said predetermined data symbol is a synchronization symbol.

For instance, one may use the SYNC symbol as defined in G.992.3 (01/2005) recommendation entitled "Asymmetric digital subscriber line transceivers2 (ADSL2)" from The International Telecommunication Union (ITU). The SYNC symbol occurs once every 69 symbols, that is to say once every 17 ms.

Alternatively, the physical timing signal can be implemented by activating one or more reserved bits in the existing physical layer structure. Reserved bits are bits which are kept for future use within a standard specification.

Still alternatively, the physical timing signal can be a dedicated analogous physical signal, such as a raised-cosine signal, that is frequency or time-multiplexed with a regular signal over the same or another communication channel.

In one embodiment of the invention, said one-way transmission delay is determined by means of a looped back signal.

The one-way transmission delay d can be measured by the master node using a loop-back of a test signal at the slave node.

Alternatively, the one-way transmission delay d can be measured by means of single End Line Testing (SELT) or Dual End Line Testing (DELT) or by matching the measured channel transfer function versus some physical model of the transmission line, with the line length as the varying parameter of this model.

In one embodiment of the invention, the method further comprises the step of applying a correction factor at said slave node to account for a receiver part of said transmission segment that is not accounted for in the determination of said one-way transmission delay.

Depending on the receiver stage at which the received signal is looped back, a correction factor may be applied so as to account for the unmeasured portion of the receive path, which correction factor being applied as an additional delay to be added to the expected arrival time as computed from the departure time $t_M$. and the one-way transmission delay d.

In one embodiment of the invention, said synchronization information comprises an occurrence identifier of said particular physical signal.

For instance, the occurrence identifier follows the data symbol numbering that is adhered to at the physical layer.

Alternatively, the physical timing signals is unnumbered, and the association between a particular timing signal and the corresponding time-stamp received from the master node is implicit.

In this situation, the time interval between the emission of two successive timing signals should be large enough so that the master node can have time to communicate to the slave node the corresponding time-stamp. This can be implemented thanks to a timer. This timer is initialized at the emission of a timing signal, and the emission of the next timing signal can only be performed after the expiration of that timer, or after an acknowledgement from the slave node has been received if any.

Also, there may be a misalignment between the physical timing signal and synchronization information. A misalignment situation can occur for example following the loss of a packet comprising synchronization information, or following the non detection or erroneous detection of a particular physical timing signal.

In one embodiment of the invention, the method further comprises the step of discarding said synchronization information if the induced offset is past a predetermined threshold.

The detection of such a misalignment is carried out by the slave node thanks to the detection of an important increase of the computed offset. This embodiment is based on the observation that the offset should decrease and converge towards zero once the initial offset has been corrected and while the slave node is tracking any minor offset on account of a clock drift, if any (clock tracking mode versus clock acquisition mode).

The slave node can store the arrival time of a number of successive timing signals and a number of successive time-stamps received via the packet layer. The slave node re-arranges the association between the time-stamps and the timings signals if misalignment is detected so to have an offset converging towards zero. The association re-arrangement is implementation specific.

A misalignment situation may also lead to a reinitialization of the synchronization process so as the slave node can recover the correct absolute time (i.e., the slave node re-enters clock acquisition mode).

In one embodiment of the invention, said synchronization information, or part thereof, are sent by said master node by means of a packet-based communication protocol.

The master time-stamp $t_M$, and possibly the one-way transmission delay d, or alternatively the expected arrival time $t_M$ + d, are sent by the master node to the slave node making use of a packet-based communication protocol such as, but not limited to, IEEE 1588v2 or IETF NTPv4.

Alternatively, the same information can be sent at the physical layer by means of some reserved bits within the physical frame structure.

In one embodiment of the invention, said one-way transmission delay is provisioned at said slave node via a management plane.

As the one-way transmission delay d is not expected to vary largely with time, one can provision its value at the slave node.

Further characterizing embodiments are mentioned in the appended claims.

The present invention also relates to a slave node comprising a slave clock to be synchronized with a master clock reference at a master node.

In accordance with a further aspect of the invention, said slave node is adapted:

- at a receive reference point at said slave node, and in the course of receiving a particular physical signal, to time-stamp the reception of a particular receive event with regard to said slave clock, thereby yielding an arrival time,
- to receive synchronization information apart from said particular physical signal indicative of a departure time of a corresponding transmit event at a transmit reference point at said master node,

wherein the occurrence of said particular physical signal is controlled by a physical communication layer (52) only and is not related to the sending of a data frame or data packet from a higher communication layer, wherein said particular physical signal is a predetermined data symbol, and said particular transmit event and said corresponding receive event is a predetermined time sample of said predetermined data symbol, and wherein said synchronization information are further indicative of a one-way transmission delay of said particular physical signal as determined over a transmission segment that spans from said transmit reference point up to said receive reference point, or over part thereof, thereby allowing the adjustment of said slave clock at said slave node.

Embodiments of a slave node according to the invention correspond with the embodiments of a method according to the invention.

Brief Description of the Drawings

The above and other objects and features of the invention will become more apparent and the invention itself will be best understood by referring to the following description of an embodiment taken in conjunction with the accompanying drawings wherein:

- Fig. 1 illustrates a synchronization network hierarchy in accordance with the invention,
- Fig. 2 illustrates a Master/slave system in accordance with an embodiment of the invention,
- Fig. 3 illustrates a Master/Slave system in DSL technologies, further referred to as xDSL,
- Fig. 4 illustrates a Master/slave system in optical Ethernet technologies.

Detailed Description of the Invention

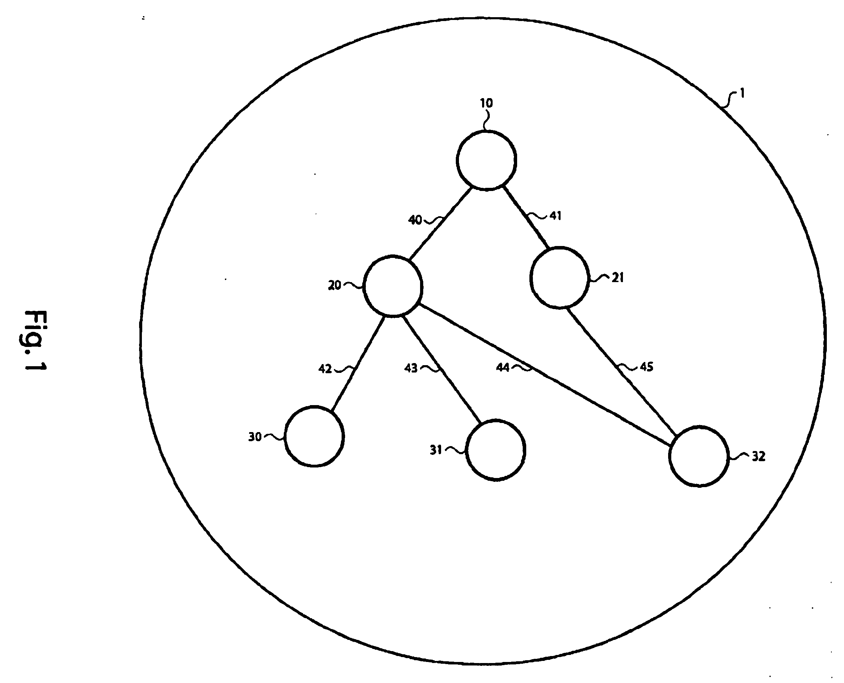

Referring to fig. 1, the synchronization network 1 is organized as a hierarchy of clock entities 10, 20, 21, 30, 31, 32 with the clock entity 10 being at the top of the hierarchy and clock entities 30, 31, 32 constituting the bottom level of the hierarchy. clock entities are coupled to each other thanks to network links 41, 42, 43, 44 or 45. In this hierarchy, higher hierarchy clock entities behave as Masters for lower hierarchy clock entities forming Master/slave pairs. For each Master/slave clock entity pair, a network link is used for the communication between the Master and the slave. The clock 10 which is at the top of the clock hierarchy is keeping the reference time to be distributed hop-by-hop down the clock hierarchy up to the bottom level. A slave can have two or more different Masters, presently the slave 32 has two Masters 20 and 21. In this case, some information such as metrics about the performance of each Master are communicated to the slave so that it can establish a precedence list of Masters. The Master at the top of the precedence Master list is the clock entity from which the slave will synchronize its time. Preferably, pairs of Master/slave are directly wired (i.e., no intermediate nodes).

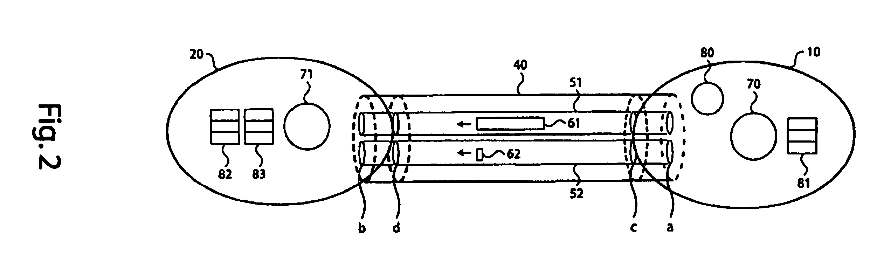

Referring to fig. 2, a Master 10 is connected to a slave 20 thanks to a network link 40. This network link is organized into communication layers, with layer 52 being the physical layer and layer 51 the packet layer. The Master 10 consists in a reference clock 70 which provides with the reference timescale to the network, a set of registers 81 and an emission reference point a. It stores the reference clock 70's value in one of the registers 81 each time the emitted physical timing signal 62 crosses the reference point a, then sends this time-stamp value asynchronously (with regards to the physical emission instant) to the slave 20 over the packet layer 51 thanks to the packet 61. The slave 20 consists in a local clock 71, two sets of registers, respectively 82 and 83, and a reception reference point b. The slave 20 latches the local clock value into one of the registers 82 each time it detects a physical timing signal crossing the reception reference point b. It also stores the emission time-stamp value related to this physical timing signal received via the packet 61 in one of the registers 83.

In this embodiment, the Master/slave system makes use of a loop-back procedure in order to measure the one-way transmission delay of the physical timing signal. within this procedure, the Master 10 sends a physical signal from an emission reference point c, which signal being looped back by the slave 20 at the reference point d. c and d can be different from respectively a and b as per technological implementation constraints, but are defined so that the cumulative processing delays, respectively between a and c and between b and d, are smaller than the target time accuracy.

Alternatively, the processing delays between a and c and/or between b and d are not negligible yet are deterministic so as the slave clock's offset can be corrected accordingly.

In this embodiment, the Master 10 does not send out the next physical timing signal until getting the acknowledgement from the slave 20 that the latter has validly received the time-stamp value of the current physical timing signal via the packet layer. A timer 80 is implemented at the Master 10 in order to prevent the Master 10 from waiting indefinitely for an acknowledgement from the slave 20 in case of error. Thus at expiration of the timer 80 the Master 10 resends the current time-stamp value. This procedure allows for the Master/slave system to ensure all the transmitted time-stamp values are validly received. However, this procedure does not avoid discrepancies at the physical layer and it may happen that the slave 20 fails to detect a physical timing signal. In such a case, the slave 20 can easily detects the error thanks to the fact that it receives two successive time-stamp values at the packet layer without any corresponding physical timing signal being received at the physical layer. Moreover, the slave 20 can re-arrange the correspondence between the registers 82 and 83 to optimize the offset which should converge to zero with time.

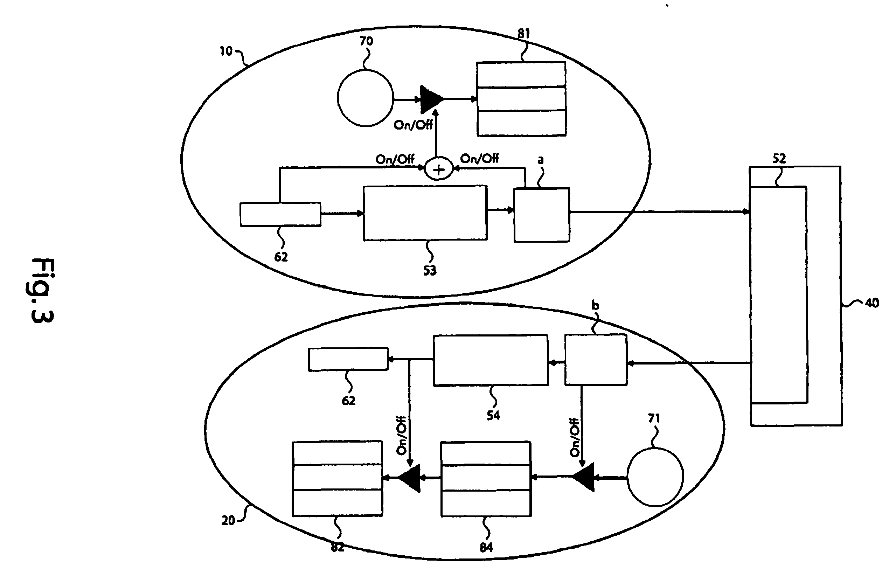

Referring to fig. 3, the above embodiment is applied to xDSL technologies which are characterized by the fact that the xDSL physical layer generally introduces important jitter. This section puts more stresses on the physical layer as it is more technological dependent. Indeed, packet communication, often performed over IP protocol, is generally transparent to the underlined physical layer.

In this embodiment, the physical communication channel 52 consists of the combination of xDSL bandwidth channels and the analog front-ends. The physical timing signal 62 is here implemented as a SYNC symbol. The physical timing signal rate is thus periodic with a period being 68 x 250 microseconds or 17 milliseconds. The Digital signal Processing (DSP) units 53 and 54 include all the different steps of the xDSL physical layer at the Digital subscriber Line Access Multiplexer (DSLAM) transmitter and at the customer Premises Equipment (CPE) receiver respectively. Emission reference point a is defined as the emission time of the nth sample (time domain) of the xDSL SYNC symbol, with n being a parameter of the system. Thus the Master 10, which is located within the DSLAM latches, the reference clock 70 value into one of the registers 81 when detecting at reference point a the nth sample of a SYNC symbol. This latching is, of course, deactivated for regular data symbols. On the receive side, the slave 20, which is located in the CPE, latches the value of the local clock 71 into one of the registers 84 when detecting the nth sample of a SYNC symbol. Then the slave 20 transfers the received time of the corresponding nth sample from register set 84 into register set 82. It is to be noted, as for examples, that the sample duration/resolution is 0.028 microseconds within the ANSI T1.424 standard (sample frequency equal to 35.328 MHz) and is 0.45 microseconds within the ITU-T G.992.1 standard (sample frequency equal to 2208 KHz).

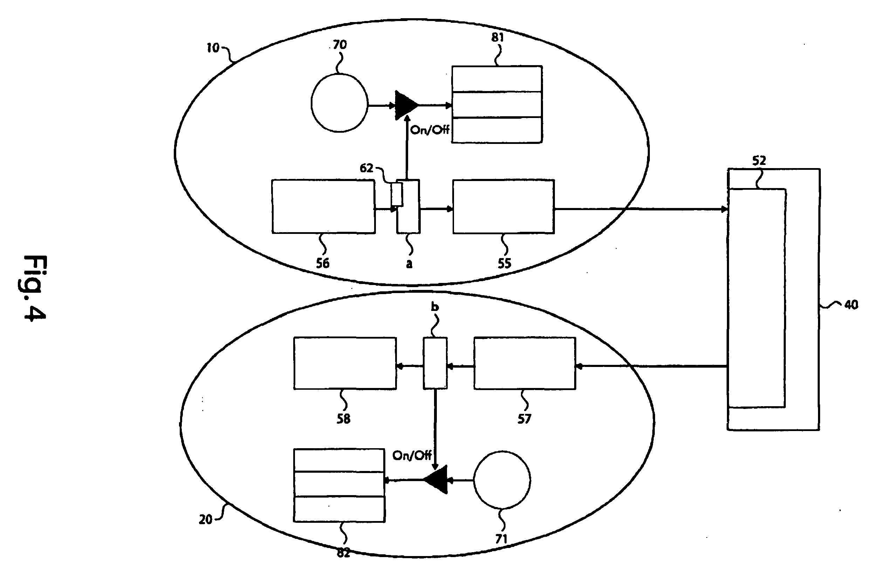

Referring to fig. 4, the embodiment of fig. 2 is applied into optical Ethernet (e.g., 1000 Base-X). This section only describes implementation parts which are specific to the optical Ethernet technology. Both functional blocks 55 and 56 as well as the reference point a are located inside the physical layer. In this preferred embodiment, the functional block 56 is within the Physical coding sublayer (PCS) and the physical timing signal is embodied as a reserved special code-group such as k30.7 specified within the 8B/10B transmission code (cf. IEEE std 802.3 - Carrier sense multiple access with collision detection (CSMA/CD) access method and physical layer specifications - December 2005). The reference point a is embodied here as the Ten Bit Interface (TBI) which is the interface between the PCS and the PMD (Physical Medium Dependent) physical sub-layers. As for the general case, the detection of such signal at reference point a triggers the latching of the current reference clock 70 value into one of registers 81. The operation is quite symmetric at the slave 20 side where the reception reference point b is also positioned at the TBI. At detection of the reserved special code-group, the slave 20 latches the local clock value into one of registers 82.

In order to measure the one-way transmission delay of the physical timing signal between point a and point b, the reserved special code-group is looped back at the slave 20. Due to the symmetry of optical Ethernet operations between the emission and the reception, reference points c and d as described in fig. 2 can be considered in this embodiment as substantially similar to point a and b respectively.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. All examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. when provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. other hardware, conventional and/or custom, such as read only memory (ROM), random access memory (RAM), and non volatile storage, may also be included.

**Claims**

1. A method for synchronizing a slave clock (71) at a slave node (20) to a master clock reference (70) at a master node (10), and comprising the steps of:

- at a transmit reference point (a) at said master node, and in the course of transmitting a particular physical signal (62), time-stamping a particular transmit event with regard to said master clock, thereby yielding a departure time,
- at a receive reference point (b) at said slave node, and in the course of receiving said particular physical signal, time-stamping a corresponding receive event with regard to said slave clock, thereby yielding an arrival time,
- determining a one-way transmission delay of said particular physical signal over a transmission segment (c-d) that spans from said transmit reference point up to said receive reference point, or over part thereof,

- sending synchronization information (61) to said slave node apart from said particular physical signal indicative of said departure time, **characterised by**

the occurrence of said particular physical signal is controlled by a physical communication layer (52) only and is not related to the sending of a data frame or data packet from a higher communication layer, wherein said particular physical signal is a predetermined data symbol, and said particular transmit event and said corresponding receive event is a predetermined time sample of said predetermined data symbol,
and wherein said synchronization information are further indicative of said one-way transmission delay, thereby allowing the adjustment of said slave clock at said slave node.

2. A method according to claim 1, wherein said predetermined data symbol is a synchronization symbol.

3. A method according to claim 1, wherein said one-way transmission delay is determined by means of a looped back signal.

4. A method according to claim 3, and further comprising the step of applying a correction factor at said slave node to account for a receiver part (b-d) of said transmission segment that is not accounted for in the determination of said one-way transmission delay.

5. A method according to claim 1, wherein said synchronization information comprises an occurrence identifier of said particular physical signal.

6. A method according to claim 1, and further comprising the step of discarding said synchronization information if the induced offset is past a predetermined threshold.

7. A method according to claim 1, wherein said synchronization information, or part thereof, are sent by said master node by means of a packet-based communication protocol.

8. A method according to claim 1, wherein said one-way transmission delay is provisioned at said slave node via a management plane.

9. A method according to claim 1, wherein said synchronization information comprises said departure time and said one-way transmission delay.

10. A method according to claim 1, wherein said synchronization information comprises an expected arrival time derived from said departure time and from said one-way transmission delay.

11. A slave node (20) comprising a slave clock (71) to be synchronized with a master clock reference (70) at a master node (10), and adapted:

    - at a receive reference point (b) at said slave node, and in the course of receiving a particular physical signal (62), to time-stamp the reception of a particular receive event with regard to said slave clock, thereby yielding an arrival time,
    - to receive synchronization information (61) apart from said particular physical signal indicative of a departure time of a corresponding transmit event at a transmit reference point (a) at said master node"

wherein the occurrence of said particular physical signal is controlled by a physical communication layer (52) only and is not related to the sending of a data frame or data packet from a higher communication layer, **characterised by**
said particular physical signal is a predetermined data symbol, and said particular transmit event and said corresponding receive event is a predetermined time sample of said predetermined data symbol,
and wherein said synchronization information are further indicative of a one-way transmission delay of said particular physical signal as determined over a transmission segment (c-d) that spans from said transmit reference point up to said receive reference point, or over part thereof, thereby allowing the adjustment of said slave clock at said slave node.

## Patentansprüche

1. Verfahren zum Synchronisieren eines Slave-Taktgebers (71) an einem Slave-Knoten (20) gemäß einer Master-Taktgeber-Referenz (70) an einem Master-Knoten (10), die folgenden Schritte umfassend:

    - An einem Referenz-Übertragungspunkt (a) an dem besagten Master-Knoten, und im Zuge der Übertragung eines bestimmten physikalischen Signals (62), Zeitstempeln eines bestimmten Übertragungsereignisses in Bezug auf den besagten Master-Taktgeber, woraus sich eine Abgangszeit ergibt,
    - an einem Referenz-Empfangspunkt (b) an dem besagten Slave-Knoten, und im Zuge des Empfangs des besagten bestimmten physikalischen Signals, Zeitstempeln eines entsprechenden Empfangsereignisses in Bezug auf den besagten Slave-Taktgeber, woraus sich eine Ankunftszeit ergibt,
    - Ermitteln einer Einweg-Übertragungsverzögerung des besagten bestimmten physikalischen Signals über ein Übertragungssegment (c-d), welches sich von dem besagten Referenz-Übertragungspunkt bis zu dem besagten Referenz-Empfangspunkt erstreckt, oder über einen Teil davon,

- Senden von Synchronisationsinformationen (61) an den besagten Slave-Knoten getrennt von dem besagten bestimmten physikalischen Signal, welche für die besagte Abgangszeit indikativ sind,

**dadurch gekennzeichnet, dass**

das Auftreten des besagten bestimmten physikalischen Signals nur von einer physikalischen Kommunikationsschicht (52) gesteuert wird und nicht mit dem Senden eines Datenrahmens oder Datenpakets von einer höheren Kommunikationsschicht verbunden ist,

wobei das besagte bestimmte physikalische Signal ein vorbestimmtes Datensymbol ist, und das besagte bestimmte Übertragungsereignis und das besagte entsprechende Empfangsereignis eine vorbestimmte Zeitabtastung des besagten vorbestimmten Datensymbols sind,

und wobei die besagten Synchronisationsinformationen weiterhin für die besagte Einweg-Übertragungsverzögerung indikativ sind, wodurch die Anpassung des besagten Slave-Taktgebers an dem besagten Slave-Knoten ermöglicht wird.

2. Verfahren nach Anspruch 1, wobei das besagte vorbestimmte Datensymbol ein Synchronisationssymbol ist.

3. Verfahren nach Anspruch 1, wobei die besagte Einweg-Übertragungsverzögerung anhand eines zurückgeschleiften Signals ermittelt wird.

4. Verfahren nach Anspruch 3, und weiterhin umfassend den Schritt des Anwendens eines Korrekturfaktors an dem besagten Slave-Knoten, um ein Empfangsteil (b-d) des besagten Übertragungssegments, welches in der Ermittlung der besagten Einweg-Übertragungsverzögerung nicht berücksichtigt wird, zu berücksichtigen.

5. Verfahren nach Anspruch 1, wobei die Synchronisationsinformationen eine Ereigniskennung des besagten bestimmten physikalischen Signals umfasst.

6. Verfahren nach Anspruch 1, und weiterhin umfassend den Schritt des Verwerfens der besagten Synchronisationsinformationen, wenn der induzierte Versatz einen vorbestimmten Grenzwert überschreitet.

7. Verfahren nach Anspruch 1, wobei die Synchronisationsinformationen, oder ein Teil davon, anhand eines paketbasierten Kommunikationsprotokolls von dem besagten Master-Knoten gesendet werden.

8. Verfahren nach Anspruch 1, wobei die besagte Einweg-Übertragungsverzögerung über eine Verwaltungsebene an dem besagten an dem besagten Slave-Knoten vorgehalten wird.

9. Verfahren nach Anspruch 1, wobei die besagten Synchronisationsinformationen die besagte Abgangszeit und die besagte Einweg-Übertragungsverzögerung enthalten.

10. Verfahren nach Anspruch 1, wobei die besagten Synchronisationsinformationen eine von der besagten Abgangszeit und von der besagten Einweg-Übertragungsverzögerung abgeleitete erwartete Ankunftszeit enthalten.

11. Slave-Knoten (20), welcher einen mit einer Master-Taktgeber-Referenz (70) an einem Master-Knoten (10) zu synchronisierenden Slave-Taktgeber (71) umfasst und dazu ausgelegt ist:

- An einem Referenz-Empfangspunkt (b) an dem besagten Slave-Knoten, und im Zuge des Empfangs eines bestimmten physikalischen Signals (62), den Empfang eines bestimmten Empfangsereignisses in Bezug auf den besagten Slave-Taktgeber mit einem Zeitstempel zu versehen, woraus sich eine Ankunftszeit ergibt,
- Synchronisationsinformationen (61) getrennt von dem besagten bestimmten physikalischen Signal zu empfangen, welche für eine Abgangszeit eines entsprechenden Übertragungsereignisses an einem Referenz-Übertragungspunkt (a) an dem besagten Master-Knoten indikativ sind,

wobei das Auftreten des besagten bestimmten physikalischen Signals nur von einer physikalischen Kommunikationsschicht (52) gesteuert wird und nicht mit dem Senden eines Datenrahmens oder Datenpakets von einer höheren Kommunikationsschicht verbunden ist,

**dadurch gekennzeichnet, dass**

das besagte bestimmte physikalische Signal ein vorbestimmtes Datensymbol ist, und das besagte bestimmte Übertragungsereignis und das besagte entsprechende Empfangsereignis eine vorbestimmte Zeitabtastung des besagten vorbestimmten Datensymbols sind,

und wobei die besagten Synchronisationsinformationen weiterhin für die besagte Einweg-Übertragungsverzögerung des besagten bestimmten physikalischen Signals indikativ sind, wie sie über ein Übertragungssegment (c-d), welches sich von dem besagten Referenz-Übertragungspunkt bis zu dem besagten Referenz-Empfangspunkt erstreckt, oder über einen Teil davon, ermittelt wurde, wodurch die Anpassung des besagten Slave-Taktgebers an dem besagten Slave-Knoten ermöglicht wird.

## Revendications

1. Procédé de synchronisation d'une horloge esclave (71) au niveau d'un noeud esclave (20) avec une référence d'horloge maîtresse (70) au niveau d'un noeud maître (10), et comprenant les étapes suivantes :

   - à un point de référence de transmission (a) au niveau dudit noeud maître, et durant la transmission d'un signal physique particulier (62), horodater un événement de transmission particulier en fonction de ladite horloge maîtresse, produisant ainsi une heure de départ,
   - à un point de référence de réception (b) au niveau dudit noeud esclave, et durant la réception dudit signal physique particulier, horodater un événement de réception correspondant en fonction de ladite horloge maîtresse, produisant ainsi une heure d'arrivée,
   - déterminer un retard de transmission unidirectionnelle dudit signal physique particulier sur un segment de transmission (c-d), qui s'étend dudit point de référence de transmission jusqu'audit point de référence de réception, ou sur une partie de celui-ci,
   - envoyer des informations de synchronisation (61) audit noeud esclave à l'exception dudit signal physique particulier indiquant ladite heure de départ,

   **caractérisé en ce que**
   l'occurrence dudit signal physique particulier est contrôlée uniquement par une couche de communication physique (52) et n'est pas liée à l'envoi d'une trame de données ou d'un paquet de données à partir d'une couche de communication supérieure,
   dans lequel ledit signal physique particulier est un symbole de données prédéterminé, et ledit événement de transmission particulier et ledit événement de réception correspondant sont un échantillon d'heure prédéterminé dudit symbole de données prédéterminé,
   et dans lequel lesdites informations de synchronisation indiquent en outre ledit retard de transmission unidirectionnelle, permettant ainsi le réglage de ladite horloge esclave au niveau dudit noeud esclave.

2. Procédé selon la revendication 1, dans lequel ledit symbole de données prédéterminé est un symbole de synchronisation.

3. Procédé selon la revendication 1, dans lequel ledit retard de transmission unidirectionnelle est déterminé au moyen d'un signal rebouclé.

4. Procédé selon la revendication 3, et comprenant en outre l'étape d'application d'un facteur de correction au niveau dudit noeud esclave pour prendre en compte une partie de réception (b-d) dudit segment de transmission qui n'est pas prise en compte dans la détermination dudit retard de transmission unidirectionnelle.

5. Procédé selon la revendication 1, dans lequel lesdites informations de synchronisation comprennent un identifiant d'occurrence dudit signal physique particulier.

6. Procédé selon la revendication 1, et comprenant en outre l'étape d'élimination desdites informations de synchronisation si le décalage induit dépasse un seuil prédéterminé.

7. Procédé selon la revendication 1, dans lequel lesdites informations de synchronisation, ou une partie de celles-ci, sont envoyées par ledit noeud maître au moyen d'un protocole de communication par paquets.

8. Procédé selon la revendication 1, dans lequel ledit retard de transmission unidirectionnelle est fourni au niveau dudit noeud esclave par l'intermédiaire d'un plan de gestion.

9. Procédé selon la revendication 1, dans lequel lesdites informations de synchronisation comprennent ladite heure de départ et ledit retard de transmission unidirectionnelle.

10. Procédé selon la revendication 1, dans lequel lesdites informations de synchronisation comprennent une heure d'arrivée prévue dérivée de ladite heure de départ et dudit retard de transmission unidirectionnelle.

11. Noeud esclave (20) comprenant une horloge esclave (71) à synchroniser avec une référence d'horloge maîtresse (70) au niveau d'un noeud maître (10), et adapté :

   - à un point de référence de réception (b) au niveau dudit noeud esclave, et durant la réception d'un signal physique particulier (62), pour horodater la réception d'un événement de réception particulier en fonction de ladite horloge esclave, produisant ainsi une heure d'arrivée,
   - pour recevoir des informations de synchronisation (61) à l'exception dudit signal physique particulier indiquant une heure de départ d'un événement de transmission correspondant à un point de référence de transmission (a) au niveau dudit noeud maître,

dans lequel l'occurrence dudit signal physique particulier est contrôlée uniquement par une couche de communication physique (52) et n'est pas liée à l'envoi d'une trame de données ou d'un paquet de données à partir d'une couche de communication supérieure, **caractérisé en ce que**
ledit signal physique particulier est un symbole de données prédéterminé, et ledit événement de transmission particulier et ledit événement de réception correspondant sont un échantillon d'heure prédéterminé dudit symbole de données prédéterminé,
et dans lequel lesdites informations de synchronisation indiquent en outre un retard de transmission unidirectionnelle dudit signal physique particulier comme cela est déterminé sur un segment de transmission (c-d) qui s'étend dudit point de référence de transmission jusqu'audit point de référence de réception, ou sur une partie de celui-ci, permettant ainsi le réglage de ladite horloge esclave au niveau dudit noeud esclave.

Fig. 1

Fig. 2

**Fig.3**

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0150657 A2
- US 2002024973 A1